# EUROPEAN PATENT SPECIFICATION

(11) **EP 3 826 096 B1**
(45) Date of publication and mention of the grant of the patent: **10.04.2024**
(21) Application number: 19863683.9
(22) Date of filing: 20.09.2019
(51) Int. Cl.: H01M 10/0565, H01M 10/052, H01M 4/134, H01M 4/38

(54) **COMPOSITION FOR GEL POLYMER ELECTROLYTE AND LITHIUM SECONDARY BATTERY INCLUDING GEL POLYMER ELECTROLYTE FORMED THEREFROM**
ZUSAMMENSETZUNG FÜR EINEN GELPOLYMERELEKTROLYT UND LITHIUMSEKUNDÄRBATTERIE MIT DARAUS HERGESTELLTEM GEL-POLYMERELEKTROLYT
COMPOSITION POUR ÉLECTROLYTE POLYMÈRE EN GEL ET ACCUMULATEUR AU LITHIUM COMPRENANT UN ÉLECTROLYTE POLYMÈRE EN GEL AINSI FORMÉ

(30) Priority: 21.09.2018 KR 20180114101
(43) Date of publication of application: 26.05.2021
(73) Proprietor: LG Energy Solution, Ltd., Seoul 07335 (KR)
(72) Inventor: PARK, Sol Ji, Daejeon 34122 (KR); AHN, Kyoung Ho, Daejeon 34122 (KR); HAN, Jun Hyeok, Daejeon 34122 (KR); LEE, Chul Haeng, Daejeon 34122 (KR)
(74) Representative: Hoffmann Eitle
(86) International application number: PCT/KR2019/012245
(87) International publication number: WO 2020/060293

(56) References cited:
- EP-A1- 3 203 565
- EP-A1- 3 694 040
- KR-A- 20050 089 240
- KR-A- 20120 000 399
- KR-A- 20120 007 281
- KR-A- 20160 040 128
- US-A- 5 508 130
- US-A1- 2013 040 207

## Description

### TECHNICAL FIELD

### Cross-reference to Related Applications

This application claims the benefit of Korean Patent Application No. 2018-0114101, filed on September 21, 2018, in the Korean Intellectual Property Office.

### Technical Field

The present invention relates to a composition for a gel polymer electrolyte and a lithium secondary battery including a gel polymer electrolyte formed therefrom.

### BACKGROUND ART

Recently, there is a growing demand for high performance, high stability secondary batteries as electric, electronic, communication, and computer industries have rapidly developed. Particularly, in line with miniaturization and lightweight trends of electronic and communication devices, thin and miniaturized lithium secondary batteries, as core components in this field, are required.

Lithium secondary batteries may be divided into a lithium ion battery using a liquid electrolyte and a lithium polymer battery using a polymer electrolyte depending on the electrolyte used.

The lithium ion battery is advantageous in that it has high capacity, but the lithium ion battery is disadvantageous in that, since the liquid electrolyte containing a lithium salt is used, there is a risk of leakage and explosion and battery design is complicated to prepare for the risk.

In contrast, with respect to the lithium polymer battery, since a solid polymer electrolyte or a gel polymer electrolyte containing a liquid electrolyte solution is used as the electrolyte, stability is improved and, simultaneously, flexibility is obtained, and thus, the lithium polymer battery may be developed in various forms, for example, in the form of small or thin batteries.

A secondary battery, in which the gel polymer electrolyte is used, may be prepared by the following two methods.

First, after an electrolyte composition is prepared by mixing an oligomer or monomer polymerizable with a polymerization initiator in a liquid electrolyte solution in which a lithium salt is dissolved in a non-aqueous organic solvent, the electrolyte composition is injected into a battery accommodating an electrode assembly, and gelation (crosslinking) is performed under appropriate temperature and time conditions to prepare the secondary battery.

However, with respect to the above method, since wetting in a cell is poor due to high viscosity and surface tension problem of the solution before the injection, it is disadvantageous in that mechanical strength is not easily secured even after the gelation.

As another method, after one surface of one of an electrode and a separator is coated with the electrolyte composition and curing (gelation) is performed by using heat or ultraviolet (UV) light to form a gel polymer electrolyte, an electrode assembly is prepared by winding or stacking the electrode and/or the separator on which the gel polymer electrolyte is formed, the electrode assembly is inserted into a battery case, and the secondary battery may then be prepared by reinjecting a conventional liquid electrolyte solution thereinto.

However, this method requires a heat or UV irradiation process for gelation and has a limitation in that the gel-coated separator absorbs moisture to degrade performance and stability of the battery. Furthermore, since a polyethylene separator, which has been used as a conventional separator, has a high thermal contraction coefficient, a short circuit occurs between the positive electrode and the negative electrode when used under an abnormal condition where the temperature rises, and thus, the stability of the battery may be reduced.

Therefore, there is a need to develop a method which may secure mechanical strength and ion transfer capability and may simultaneously prepare a gel polymer electrolyte having improved stability at high temperature.

EP 3 203 565 A1 describes a gel polymer electrolyte including a polymer network, and an electrolyte solution impregnated in the polymer network, wherein the polymer network is formed by combining a first oligomer, which includes a unit derived from a monomer including at least one copolymerizable acrylate or acrylic acid, a unit including urethane, and a unit including siloxane, in a three-dimensional structure, and a lithium secondary battery including the gel polymer electrolyte.

EP 3 694 040 A1 describes a gel polymer electrolyte composition and a lithium secondary battery including the same, and particularly a gel polymer electrolyte composition in which flame retardancy is improved by including an ionic liquid instead of a non-aqueous organic solvent, as well as a lithium salt, a polymerization initiator, and an oligomer having a specific structure.

US 5 508 130 A describes solid electrolytes containing lithium bis(trifluoromethane sulfonyl)imide and a solvent and, in particular, a solvent comprising a mixture of an organic carbonate and triglyme as well as electrolytic cells prepared from such solid electrolytes.

KR 2016 0040128 A describes an amide compoundcontaining electrolyte comprises: an amide compound of a specific formula; an ionizable lithium salt; a carbonate compound; and a glyme compound. The amount of glyme compound is 0.5-30 parts by weight basis of 100.0 parts by weight non-aqueous solvent.

### PRIOR ART DOCUMENT

Korean Patent Application Laid-open Publication No. 2018-0026358

### DISCLOSURE OF THE INVENTION

### TECHNICAL PROBLEM

An aspect of the present invention provides a composition for a gel polymer electrolyte which includes a glyme-based solvent as a non-aqueous organic solvent and includes a polymerizable oligomer having a polymerizable substituent having a specific structure.

Another aspect of the present invention provides a gel polymer electrolyte which is formed by thermal polymerization of the composition for a gel polymer electrolyte to improve mechanical strength and electrochemical stability.

Another aspect of the present invention provides a lithium secondary battery in which the electrochemical stability is improved by including the gel polymer electrolyte.

### TECHNICAL SOLUTION

According to an aspect of the present invention, there is provided a composition for a gel polymer electrolyte which includes:
a lithium salt,
a non-aqueous organic solvent including a glyme-based solvent,
an oligomer represented by Formula 1 below, and
a polymerization initiator:
wherein the glyme-based solvent comprises at least one selected from the group consisting of dimethoxyethane (monoglyme), diglyme, and tetraglyme.

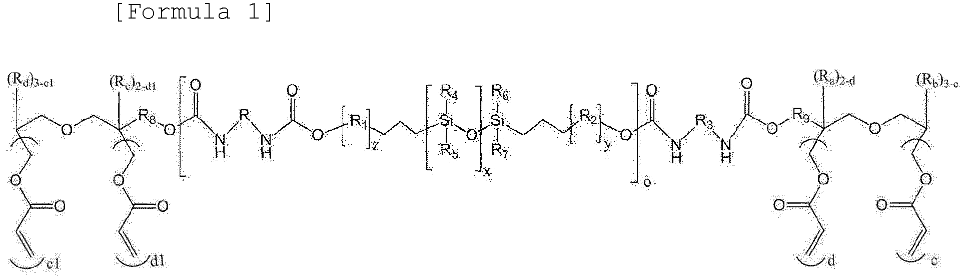

In Formula 1,
R₁ is an alkylene group having 1 to 5 carbon atoms or -R₁'-O-, wherein R₁' is an alkylene group having 1 to 5 carbon atoms,
R₂ is an alkylene group having 1 to 5 carbon atoms or -O-R₂'-, wherein R₂' is an alkylene group having 1 to 5 carbon atoms,
R₄, R₅, R₆, and R₇ are each independently hydrogen or an alkyl group having 1 to 3 carbon atoms,
R and R₃ are each independently an aliphatic hydrocarbon group or an aromatic hydrocarbon group,
each of R₈ and R₉ is an alkylene group having 1 to 5 carbon atoms,
Rₐ, R_{b}, R_{c}, and R_{d} are each independently hydrogen or an alkyl group having 1 to 3 carbon atoms,
x, y, z, and o are each independently an integer of 1 to 100,
c and c1 are each independently an integer of 1 to 3, and
d and d1 are each independently an integer of 0 to 2.

According to another aspect of the present invention, there is provided a gel polymer electrolyte formed by thermal polymerization of the composition for a gel polymer electrolyte of the present invention.

According to another aspect of the present invention, there is provided a lithium secondary battery including a positive electrode, a negative electrode, a separator, and the gel polymer electrolyte of the present invention.

### ADVANTAGEOUS EFFECTS

Since an oligomer represented by Formula 1, which is included in a composition for a gel polymer electrolyte of the present invention, contains a siloxane group and a urethane group, as a hydrophobic part, as well as an acrylate group, as a hydrophilic part, in its structure to act as a surfactant in a battery, the oligomer represented by Formula 1 may improve wetting of the composition for a gel polymer electrolyte. Also, since the composition for a gel polymer electrolyte prevents a side reaction with a metal electrode by including a glyme-based solvent as a non-aqueous organic solvent, the composition for a gel polymer electrolyte may improve an effect of reducing gas generation and capacity. Thus, if the composition for a gel polymer electrolyte of the present invention, which includes both the glyme-based solvent and the oligomer represented by Formula 1, is used, a lithium secondary battery including a gel polymer electrolyte having improved mechanical strength and electrochemical stability may be achieved.

### MODE FOR CARRYING OUT THE INVENTION

Hereinafter, the present invention will be described in more detail to allow for a clearer understanding of the present invention. In this case, it will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

Before describing the present invention, the expressions "a" and "b" in the description of "a to b carbon atoms" in the specification each denote the number of carbon atoms included in a specific functional group. That is, the functional group may include "a" to "b" carbon atoms. For example, the expression "alkylene group having 1 to 5 carbon atoms" denotes an alkylene group including 1 to 5 carbon atoms, that is, -CH₂-, -CH₂CH₂-, -CH₂CH₂CH₂-, -CH₂(CH₂)CH-, - CH(CH₂)CH₂-, and -CH(CH₂)CH₂CH₂-.

Also, in the present specification, the expression "alkylene group" denotes a branched or unbranched divalent unsaturated hydrocarbon group. In an embodiment, the alkylene group may be substituted or unsubstituted. The alkylene group includes a methylene group, an ethylene group, a propylene group, an isopropylene group, a butylene group, an isobutylene group, a tert-butylene group, a pentylene group, and 3-pentylene group, but the alkylene group is not limited thereto, and each thereof may be **optionally** substituted in another exemplary embodiment.

Furthermore, unless otherwise defined in the specification, the expression "substitution" denotes that at least one hydrogen bonded to carbon is substituted with an element other than hydrogen, for example, an alkyl group having 1 to 5 carbon atoms or a fluorine element.

Also, it will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

In the present specification, the expression "glyme-based solvent" denotes an ether-based solvent in a form in which an alkylene group, a cycloalkylene group, or an arylene group is connected to an ether group, wherein it is an excellent solvent in terms of stability of a battery because the generation of internal pressure caused by volatile gas is small due to high boiling point. In the present invention, the glyme-based solvent includes at least one selected from the group consisting of dimethoxyethane (monoglyme, DME), diglyme, and tetraglyme (TEGDME).

Unless otherwise defined in the specification, the expression "molecular weight" denotes a weight-average molecular weight (Mw), and the weight-average molecular weight (Mw) of a polymer or oligomer of the present invention may be measured using gel permeation chromatography (GPC) unless otherwise specified.

Ionic conductivity in the present specification may be measured by using an alternating current impedance method. Specifically, the ionic conductivity may be measured in a frequency range of 0.1 Hz to 100 MHz using a VMP3 measurement instrument and a precision impedance analyzer (4294A).

Electrochemical (oxidation) stability in the present specification was measured using linear sweep voltammetry (LSV). A potentiostat (EG&G, model 270A) was used as a measurement instrument, and measurement temperature was 60°C.

Tensile strength in the present invention was measured for electrolyte specimens, which were collectively prepared according to ASTM standard D638 (Type V specimens), at a rate of 5 mm per minute at 25°C and a relative humidity of about 30% using Lloyd LR-10K.

### Composition for Gel Polymer Electrolyte

A composition for a gel polymer electrolyte according to the present invention includes:
a lithium salt,
a non-aqueous organic solvent including a glyme-based solvent,
an oligomer represented by Formula 1 below, and
a polymerization initiator;
wherein the glyme-based solvent comprises at least one selected from the group consisting of dimethoxyethane (monoglyme), diglyme, and tetraglyme.

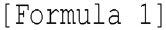

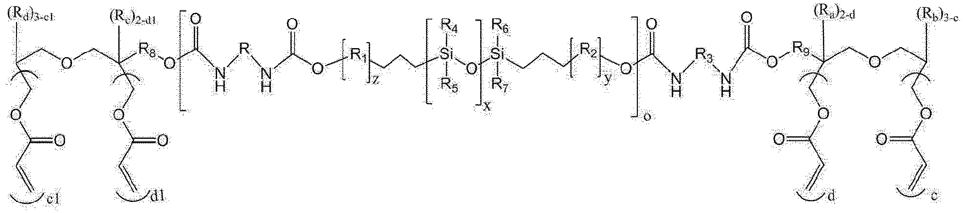

In Formula 1,
R₁ is an alkylene group having 1 to 5 carbon atoms or -R₁'-O-, wherein R₁' is an alkylene group having 1 to 5 carbon atoms,
R₂ is an alkylene group having 1 to 5 carbon atoms or -O-R₂'-, wherein R₂' is an alkylene group having 1 to 5 carbon atoms,
R₄, R₅, R₆, and R₇ are each independently hydrogen or an alkyl group having 1 to 3 carbon atoms,
R and R₃ are each independently an aliphatic hydrocarbon group or an aromatic hydrocarbon group,
each of R₈ and R₉ is an alkylene group having 1 to 5 carbon atoms,
Rₐ, R_{b}, R_{c}, and R_{d} are each independently hydrogen or an alkyl group having 1 to 3 carbon atoms,
x, y, z, and o are each independently an integer of 1 to 100,
c and c1 are each independently an integer of 1 to 3, and
d and d1 are each independently an integer of 0 to 2.

### (1) Lithium Salt

Various lithium salts typically used in an electrolyte for a lithium secondary battery may be used as the lithium salt without limitation. For example, the lithium salt may include Li⁺ as a cation, and may include one selected from the group consisting of F⁻, Cl-, Br⁻, I⁻, NO₃⁻, N(CN)₂⁻, ClO₄⁻, BF₄⁻, B₁₀Cl₁₀⁻, AlO₄⁻, AlCl₄⁻, PF₆⁻, CF₃SO₃⁻, CH₃CO₂⁻, CH₃SO₃⁻, CF₃CO₂⁻, AsF₆⁻, SbF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, (FSO₂)₂N⁻, (CF₃SO₂)₂N⁻, CF₃CF₂ (CF₃)₂CO⁻, (CF₃SO₂)₂CH⁻, (SF₅)₃C⁻, (CF₃SO₂)₃C⁻, CF₃(CF₂)₇SO₃⁻, SCN-, and (CF₃CF₂SO₂)₂N⁻ as an anion, and, in addition thereto, a lithium salt typically used in an electrolyte solution of a lithium secondary battery may be used without limitation.

Specifically, the lithium salt may include a single material selected from the group consisting of LiCl, LiBr, LiI, LiClO₄, LiBF₄, LiB₁₀Cl₁₀, LiAlO₄, LiAlCl₄, LiPF₆, LiCF₃SO₃, LiCH₃CO₂, LiCH₃SO₃, LiCF₃CO₂, LiAsF₆, LiSbF₆, lithium bis(fluorosulfonyl)imide (LiFSI, LiN(SO₂F)₂), lithium bis (perfluoroethanes sulfonyl) imide (LiBETI, LiN(SO₂CF₂CF₃)₂), and lithium bis(trifluoromethane sulfonyl)imide (LiTFSI, LiN(SO₂CF₃)₂) or a mixture of two or more thereof, and, more specifically, the lithium salt may include at least one of LiPF₆, LiFSI, and LiTFSI.

The lithium salt may be appropriately changed in a normally usable range, but may be included in a concentration of 1.0 M to 6.0 M, for example, 1.5 M to 4.0 M in the composition for a gel polymer electrolyte to obtain an optimum effect of forming a film for preventing corrosion of a surface of the electrode.

In a case in which the concentration of the lithium salt satisfies the above range, lithium cation (Li⁺) transfer characteristics (that is, cation transference number) may be improved due to an increase in lithium cations present in the composition for a gel polymer electrolyte, and an effect of reducing resistance during lithium ion diffusion may be achieved to improve cycle capacity characteristics.

That is, the composition for a gel polymer electrolyte may provide ionic conductivity and may simultaneously reduce resistance due to depletion of lithium ion during high rate charge and discharge by including 1.0 M or more of the lithium salt. If the concentration of the lithium salt is 1.0 M or less, cycle life characteristics and capacity characteristics of a lithium secondary battery may be degraded. Also, if the maximum concentration of the lithium salt is greater than 6.0 M, since viscosity of the composition for a gel polymer electrolyte is excessively increased to degrade wetting properties of the electrolyte, overall performance of the secondary battery may be degraded.

In a case in which the concentration of the lithium salt is 4 M or more, the viscosity of the electrolyte may be increased, but, since a portion of the oligomer included in the composition for a gel polymer electrolyte reduces surface tension while acting as a surfactant as described later, a reduction in wetting of the composition for a gel polymer electrolyte may be prevented.

### (2) Non-aqueous Organic Solvent

The non-aqueous organic solvent includes a glyme-based solvent that comprises at least one selected from the group consisting of dimethoxyethane (monoglyme), diglyme, and tetraglyme (TEGDME).

That is, in the present invention, since the glyme-based solvent having higher dielectric constant and lower surface tension than a linear carbonate-based organic solvent is used as the non-aqueous organic solvent, it is possible to increase an amount of the lithium salt, and thus, there is an effect of improving output due to the increase in the amount of the lithium salt and reactivity with a metal electrode may be suppressed by the use of the glyme-based solvent.

Also, in the present invention, a carbonate-based organic solvent may be further included as the non-aqueous organic solvent.

The carbonate-based organic solvent may include a cyclic carbonate-based organic solvent, a linear carbonate-based organic solvent, or a mixed organic solvent thereof.

The cyclic carbonate-based organic solvent is an organic solvent capable of well dissociating the lithium salt in the electrolyte due to high permittivity as a highly viscous organic solvent, wherein specific examples of the cyclic carbonate-based organic solvent may be at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and, among them, the cyclic carbonate-based organic solvent may include at least one of ethylene carbonate and propylene carbonate.

Also, the linear carbonate-based organic solvent is an organic solvent with low viscosity and low permittivity, wherein, as a representative example thereof, at least one organic solvent selected from the group consisting of dimethyl carbonate (DMC), diethyl carbonate (DEC), dipropyl carbonate, ethylmethyl carbonate (EMC), methylpropyl carbonate, and ethylpropyl carbonate may be used, and the linear carbonate-based organic solvent may specifically include at least one of dimethyl carbonate and ethylmethyl carbonate (EMC).

The cyclic carbonate-based organic solvent and the linear carbonate-based organic solvent may be used in a volume ratio of 0:10 to 2:8, for example, 0:10 to 1:9.

That is, the volume ratio of the cyclic carbonate-based organic solvent to the linear carbonate-based organic solvent may have a significant impact on improving ionic conductivity, low-temperature and room-temperature output, and capacity characteristics after high-temperature storage, wherein, in a case in which the cyclic carbonate-based organic solvent and the linear carbonate-based organic solvent are included in amounts within the above-described range, an effect of improving charge and discharge output characteristics and an effect of improving life characteristics may be achieved.

Since the carbonate-based organic solvent is sensitive to a side reaction due to its high reactivity with metal at a high voltage, by-products and gas generated by a chemical reaction are increased when it is used as the non-aqueous organic solvent during the application of a metal electrode, and thus, cell swelling is increased and high-temperature storage stability may be deteriorated.

In a case in which the glyme-based solvent and the carbonate-based organic solvent are mixed and used in the composition for a gel polymer electrolyte of the present invention, the glyme-based solvent and the carbonate-based organic solvent may be used in a weight ratio of 1:9 to 9:1, preferably 3:7 to 9:1, and more preferably 5:5 to 9:1.

In a case in which the weight ratio of the glyme-based solvent to the carbonate-based organic solvent satisfies the above range, a synergistic effect by mixing the two organic solvents may be obtained. If the relative weight ratio of the glyme-based solvent to the carbonate-based organic solvent is less than 1, the viscosity of the electrolyte is increased to reduce wetting of the electrolyte, and the reactivity of the carbonate-based organic solvent with the metal electrode is increased to reduce cell stability and increase swelling.

In contrast, if the relative weight ratio of the glyme-based solvent to the carbonate-based organic solvent is 5 or more, since an increase in the viscosity of the electrolyte may be suppressed, it is possible to increase the amount of the lithium salt, and thus, cell output may be further improved. Also, in a case in which the weight ratio of the glyme-based solvent to the carbonate-based organic solvent is 10 or less, since the reactivity with the metal is stabilized to improve capacity retention, the life characteristics may be further improved.

That is, the glyme-based solvent may be included in an amount of 10 wt% to 100 wt%, particularly 30 wt% to 90 wt%, and more particularly 50 wt% to 90 wt% based on a total weight of the non-aqueous organic solvent, and, in a case in which the amount of the glyme-based solvent satisfies the above range, an effect of stabilizing the metal and improving the output may be improved.

If the amount of the glyme-based solvent is less than 10 wt%, since the viscosity of the electrolyte is increased to reduce the wetting of the electrolyte and a side reaction is promoted due to the reaction of the carbonate-based organic solvent with the metal electrode, an effect of improv ing cell capacity and stability may be reduced.

The composition for a gel polymer electrolyte according to the present invention may further include an organic solvent, which may minimize the decomposition due to an oxidation/reduction reaction during charge and discharge of the secondary battery and may exhibit desired characteristics with an additive, to improve the stability. As a representative example, an ester-based solvent, an acetate-based solvent, or a nitrile-based solvent may be used alone or in a mixture of two or more thereof as the organic solvent. In this case, each solvent may be substituted with at least one halogen element such as fluorine (F), chlorine (Cl), bromine (Br), and iodine (I).

Also, the ester-based solvent may include at least one compound selected from the group consisting of a linear ester compound or a cyclic ester compound.

As a specific example, any one selected from the group consisting of methyl acetate, ethyl acetate, propyl acetate, methyl propionate, ethyl propionate, propyl propionate, and butyl propionate or a mixture of two or more thereof may be typically used as the linear ester compound, but the linear ester compound is not limited thereto.

As a specific example, the cyclic ester compound may include at least one selected from the group consisting of γ-butyrolactone, γ-valerolactone, γ-caprolactone, σ-valerolactone, and ε-caprolactone.

The nitrile-based solvent may include at least one selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, and the non-aqueous solvent according to an embodiment of the present invention may use acetonitrile.

In this case, the ester-based solvent, the acetate-based solvent, or the nitrile-based solvent may be included in a small amount such that the amount of the ester-based solvent, the acetate-based solvent, or the nitrile-based solvent is in a range of 50 wt% or less, for example, 30 wt% or less based on the total weight of the non-aqueous organic solvent.

### (3) Oligomer

The composition for a gel polymer electrolyte of the present invention is a compound having a crosslinkable substituent which may form a polymer matrix, a basic skeleton of the gel polymer electrolyte, while being oxidized by polymerization when the temperature rises, wherein it includes an oligomer represented by the following Formula 1 which contains at least one acrylate group at its end.

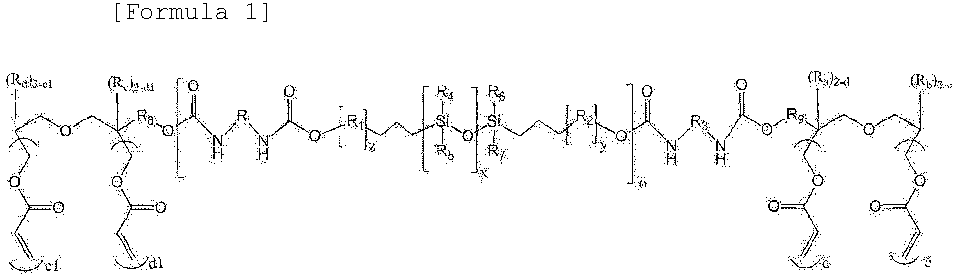

In Formula 1,
R₁ is an alkylene group having 1 to 5 carbon atoms or -R₁'-O-, wherein R₁' is an alkylene group having 1 to 5 carbon atoms,
R₂ is an alkylene group having 1 to 5 carbon atoms or -O-R₂'-, wherein R₂' is an alkylene group having 1 to 5 carbon atoms,
R₄, R₅, R₆, and R₇ are each independently hydrogen or an alkyl group having 1 to 3 carbon atoms,
R and R₃ are each independently an aliphatic hydrocarbon group or an aromatic hydrocarbon group,
each of R₈ and R₉ is an alkylene group having 1 to 5 carbon atoms,
Rₐ, R_{b}, R_{c}, and R_{d} are each independently hydrogen or an alkyl group having 1 to 3 carbon atoms,
x, y, z, and o are each independently an integer of 1 to 100,
c and c1 are each independently an integer of 1 to 3, and
d and d1 are each independently an integer of 0 to 2.

Specifically, in Formula 1, R₁ may be -R₁'-0-, wherein R₁' is an alkylene group having 1 to 5 carbon atoms, R₂ may be -O-R₂'-, wherein R₂' is an alkylene group having 1 to 5 carbon atoms, R₄, R₅, R₆, and R₇ may each independently be an alkyl group having 1 to 3 carbon atoms, R₈ and R₉ may each independently be an alkylene group having 1 to 3 carbon atoms, and Rₐ, R_{b}, R_{c}, and R_{d} may each independently be hydrogen.

More specifically, in Formula 1, R₁ may be -R₁'-O-, wherein R₁' is an alkylene group having 2 to 5 carbon atoms, R₂ may be -O-R₂'-, wherein R₂' is an alkylene group having 2 to 5 carbon atoms, R₄, R₅, R₆, and R₇ may each independently be an alkyl group having 1 to 3 carbon atoms, R₈ and R₉ may each independently be an alkylene group having 1 or 2 carbon atoms, and Rₐ, R_{b}, R_{c}, and R_{d} may each independently be hydrogen.

Also, in Formula 1, R and R₃ may be at least one aliphatic hydrocarbon group selected from the group consisting of an alicyclic hydrocarbon group and a linear hydrocarbon group.

The alicyclic hydrocarbon group may include at least one selected from the group consisting of a substituted or unsubstituted cycloalkylene group having 4 to 20 carbon atoms; a substituted or unsubstituted cycloalkenylene group having 4 to 20 carbon atoms; and a substituted or unsubstituted heterocycloalkylene group having 2 to 20 carbon atoms, and, among them, the alicyclic hydrocarbon group may be the substituted or unsubstituted cycloalkylene group having 4 to 20 carbon atoms.

The linear hydrocarbon group may include at least one selected from the group consisting of a substituted or unsubstituted alkylene group having 1 to 20 carbon atoms; a substituted or unsubstituted alkoxylene group having 1 to 20 carbon atoms; a substituted or unsubstituted alkenylene group having 2 to 20 carbon atoms; and a substituted or unsubstituted alkynylene group having 2 to 20 carbon atoms.

Furthermore, in Formula 1, R and R₃ may be an aromatic hydrocarbon group.

The aromatic hydrocarbon group may include at least one selected from the group consisting of a substituted or unsubstituted arylene group having 6 to 20 carbon atoms; and a substituted or unsubstituted heteroarylene group having 4 to 20 carbon atoms.

Specifically, the oligomer represented by Formula 1 may include at least one selected from the group consisting of compounds represented by Formula 1a and Formula 1b below.

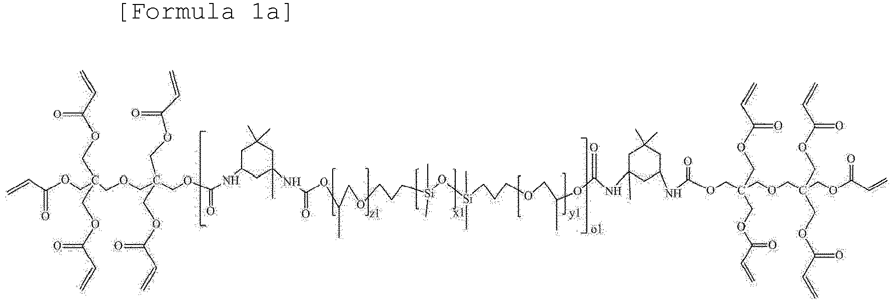

In Formula 1a,
x1, y1, z1, and ol are each independently an integer of 1 to 100.

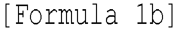

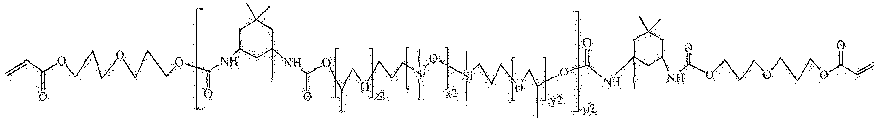

In Formula 1b,
X2, y2, z2, and o2 are each independently an integer of 1 to 100.

Since the oligomer represented by Formula 1 contains a siloxane group (-[Si-O]-) and a urethane group, as a hydrophobic part, as well as an acrylate group as a hydrophilic part in its structure, the oligomer represented by Formula 1 may exhibit a balanced affinity for a hydrophilic part (positive electrode, separator (SRS layer)) and a hydrophobic part (negative electrode, separator fabric) to act as a surfactant. Thus, the wetting of the composition for a gel polymer electrolyte may be improved by reducing the surface tension with respect to the electrode and the separator.

With respect to a polymer having a skeleton of alkylene oxide which has been used during the preparation of a conventional gel polymer electrolyte, since reduction stability is low, a film may be formed on a surface of the negative electrode during initial charge. However, since the film is easily broken at high temperature to cause a side reaction, interfacial resistance between the electrode and the gel polymer electrolyte may rather be increased.

In contrast, since the oligomer represented by Formula 1 is electrochemically stable, the oligomer represented by Formula 1 not only has high reduction stability, but also possesses the ability to dissociate the lithium salt, and thus, the oligomer represented by Formula 1 may minimize a reduction reaction on the surface of the negative electrode and may improve lithium ion mobility.

Therefore, the composition for a gel polymer electrolyte of the present invention may prepare a gel polymer electrolyte in which a side reaction with the electrode is reduced, mechanical strength is high, and an effect of stabilizing an interface between the electrode and the electrolyte is improved in comparison to a conventional composition for a gel polymer electrolyte which includes the polymer having the skeleton of alkylene oxide.

The oligomer represented by Formula 1 may be included in an amount of 0.1 wt% to 80 wt%, particularly 2 wt% to 80 wt%, and more particularly 3 wt% to 50 wt% based on a total weight of the composition for a gel polymer electrolyte.

If the amount of the oligomer represented by Formula 1 included is within the above range, that is, 0.1 wt% to 80 wt%, since a polymer network having excellent mechanical strength may be formed, a gel polymer electrolyte having improved overall performance may be prepared. Specifically, the polymer matrix may be easily formed by the oligomer when the amount of the oligomer is 2 wt% or more, for example, 3 wt% or more, and physical properties, such as mechanical strength, of the gel polymer electrolyte may be secured by a stable network structure. Also, if the amount of the oligomer is 80 wt% or less, it is possible to prevent disadvantages such as an increase in resistance due to the excessive amount of the oligomer added and limitation of movement of lithium ions, for example, a decrease in ionic conductivity, wetting of the gel polymer electrolyte may be secured, and, simultaneously, sufficient ionic conductivity may be secured by increasing a lithium ion movement effect.

A weight-average molecular weight (MW) of the oligomer represented by Formula 1 may be in a range of 1,000 g/mol to 100,000 g/mol, particularly 1,000 g/mol to 50,000 g/mol, and more particularly 1,000 g/mol to 10,000 g/mol, for example, 3,000 g/mol to 7,000 g/mol, and the range thereof may be controlled by the number of repeating units. In a case in which the weight-average molecular weight of the oligomer is within the above range, mechanical strength of the non-aqueous electrolyte solution including the oligomer may be effectively improved.

If the weight-average molecular weight of the oligomer represented by Formula 1 is less than 1,000 g/mol, since adequate mechanical strength may not be expected and the use of a greater amount of a polymerization initiator is required or a demanding additional polymerization process is required, a gel polymer electrolyte formation process may be complicated. If the weight-average molecular weight of the oligomer is greater than 100,000 g/mol, since physical properties of the oligomer itself become rigid and the affinity with the electrolyte solvent is decreased, dissolution is difficult, and thus, the formation of a uniform and excellent gel polymer electrolyte may not be expected.

The weight-average molecular weight may be measured by gel permeation chromatography (GPC) using 1200 series by Agilent Technologies. For example, a sample having a predetermined concentration is prepared, and Alliance 4, a GPC measurement system, is then stabilized. When the system is stabilized, a standard sample and the sample are injected into the system to obtain a chromatogram, and a molecular weight may then be calculated according to an analytical method (system: Alliance 4, column: Ultrahydrogel linearX2, eluent: 0.1M NaNO₃ (pH 7.0 phosphate buffer, flow rate: 0.1 mL/min, solvent: tetrahydrofuran (THF), temp: 40°C, injection: 100 pL).

### (4) Polymerization Initiator

The composition for a gel polymer electrolyte of the present invention may include a polymerization initiator to perform a radical reaction required during the preparation of the gel polymer electrolyte.

A conventional thermal or photopolymerization initiator known in the art may be used as the polymerization initiator. For example, the polymerization initiator forms a radical by being dissociated by heat, and may react with the oligomer represented by Formula 1 by free radical polymerization to form a gel polymer electrolyte.

Specifically, non-limiting examples of the polymerization initiator may be organic peroxides or hydroperoxides, such as benzoyl peroxide, acetyl peroxide, dilauryl peroxide, di-tert-butyl peroxide, t-butyl peroxy-2-ethyl-hexanoate, cumyl hydroperoxide, and hydrogen peroxide, and one or more azo compounds selected from the group consisting of 2,2'-azobis(2-cyanobutane), 2,2'-azobis(methylbutyronitrile), 2,2'-azobis(iso-butyronitrile) (AIBN), and 2,2'-azobisdimethyl-valeronitrile (AMVN), but the polymerization initiator is not limited thereto.

The polymerization initiator forms a radical by being dissociated by heat, for a non-limiting example, heat at 30°C to 100°C in the battery or by being dissociated at room temperature (5°C to 30°C), and the polymerizable oligomer may react with an acrylate-based compound by free radical polymerization to form a gel polymer electrolyte.

The polymerization initiator may be included in an amount of 0.01 part by weight to 20 parts by weight, for example, 0.1 part by weight to 10 parts by weight based on 100 parts by weight of the oligomer represented by Formula 1.

In a case in which the amount of the polymerization initiator is within a range of 0.01 part by weight to 20 parts by weight, gel polymer electrolyte properties may be secured by increasing a gel polymer conversion rate, and the wetting of the composition for a gel polymer electrolyte with respect to the electrode may be improved by preventing a pre-gel reaction.

### (5) Oxygen Scavenger

Also, the composition for a gel polymer electrolyte of the present invention may further include an oxygen scavenger as an additive.

In general, when the radical reaction required during the preparation of the gel polymer electrolyte is performed in the presence of oxygen, since chain polymerization efficiency is reduced while the reaction is stabilized due to quenching by the oxygen, it is known that a gel conversion rate of a monomer and/or oligomer is reduced. That is, since the radical generated from the polymerization initiator is consumed by easily reacting with oxygen, radical polymerization reactivity is reduced in the presence of oxygen.

Thus, the composition for a gel polymer electrolyte of the present invention may further include the oxygen scavenger to improve liquid injection characteristics by controlling gelation reactivity at room temperature and in an oxygen atmosphere. The gel polymer electrolyte composition having such a configuration may improve a polymerization effect by reducing the influence of oxygen even when gelation is performed in an oxygen atmosphere.

The oxygen scavenger may include at least one of a trisalkylsilyl phosphite-based compound and a trisarylsilyl phosphite-based compound. That is, since oxygen is scavenged while a phosphite structure is converted into a phosphate structure, the trisalkylsilyl phosphite-based compound or the trisarylsilyl phosphite-based compound included as the oxygen scavenger may prevent the removal of the radical generated from the polymerization initiator by the oxygen.

Typical examples of the trisalkylsilyl phosphite-based compound may be at least one selected from the group consisting of tris-2,2,2-trifluoroethyl phosphite (TFEPi), tris(methylsilyl) phosphite (TMSPi), tris(ethylsilyl) phosphite (TESPi), tris(propylsilyl) phosphite (TPSPi), and tris(butylsilyl) phosphite. Also, the trisarylsilyl phosphite-based compound may include trisphenylsilyl phosphite. In this case, it is desirable to avoid the use of a fluorine-based oxygen scavenger containing a fluorine element as the oxygen scavenger.

Since the composition for a gel polymer electrolyte of the present invention includes the oxygen scavenger, it is advantageous in that a pre-gel reaction does not occur even at room temperature.

The oxygen scavenger may be included in an amount of 0.01 wt% to 10 wt% based on the total weight of the composition for a gel polymer electrolyte. If the amount of the oxygen scavenger included is within a range of 0.01 wt% to 10 wt%, for example, 0.5 wt% to 10 wt%, a gelation phenomenon may be suppressed by reducing a polymerization conversion rate at room temperature and in an oxygen atmosphere. Specifically, in a case in which the amount of the oxygen scavenger is 0.01 wt% or more, since an oxygen removal effect is excellent, the polymerization conversion rate may be increased, and thus, mechanical strength of the gel polymer electrolyte may be improved. Also, in a case in which the amount of the oxygen scavenger is 10 wt% or less, an increase in resistance due to the residual additive may be prevented.

### (6) Additional Additives

In order to prevent a gel polymer electrolyte from being decomposed during the preparation of the gel polymer electrolyte to cause collapse of a negative electrode in a high output environment, or further improve low-temperature high-rate discharge characteristics, high-temperature stability, overcharge protection, high-temperature swelling improvement, resistance reduction, lifetime improvement, and gas reduction effect, the composition for a gel polymer electrolyte of the present invention may further include additional additives, if necessary.

Specific examples of the additional additive may be at least one selected from the group consisting of vinylene carbonate (VC), vinyl ethylene carbonate (VEC), ethylene sulfate (Esa), trimethylene sulfate (TMS), methyl trimethylene sulfate (MTMS), 1,3-propane sultone (PS), succinonitrile (SN), adiponitrile (Adn), ethylene sulfite, 1,3-propene sultone (PRS), fluoroethylene carbonate (FEC), lithium difluoro(bisoxalato)phosphate, lithium difluorophosphate, lithium oxalyldifluoroborate, LiBr, LiF, LiI, succinyl anhydride, CsNO₃, In(TFSI)₃, tris(2,2,2-trifluoroethyl)phosphate (TFEPa), 1,1,2,2-tetrafluoroethyl 2,2,2-trifluoroethyl ether, F3-EMC (2,2,2-trifluoroethyl methyl carbonate), difluoroethyl acetate (di-FEC), fluorobenzene, difluorobenzene, hexafluorobenzene, and LiBF₄.

Vinylene carbonate, vinyl ethylene carbonate, or succinonitrile, among these additional additives, may form a stable solid electrolyte interface (SEI) with lithium difluorophosphate on a surface of the negative electrode during an initial activation process of the secondary battery.

The LiBF₄ is added to a lithium secondary battery and may improve high-temperature stability of the secondary battery by suppressing the generation of gas which may be generated due to the decomposition of the composition for a gel polymer electrolyte at high temperature.

At least one of the additional additives may be mixed and may be included in an amount of 0.01 wt% to 5 wt%, particularly 0.1 wt% to 3 wt%, and preferably 0.5 wt% to 3 wt% based on the total weight of the composition for a gel polymer electrolyte. If the amount of the additional additive is less than 0.01 wt%, effects of improving low-temperature output, high-temperature storage characteristics, and high-temperature life characteristics of the battery are insignificant, and, if the amount of the additional additive is greater than 5 wt%, there is a possibility that a side reaction in the composition for a gel polymer electrolyte occurs excessively during charge and discharge of the battery. Particularly, since the additives for forming an SEI may not be sufficiently decomposed at high temperatures when excessive amounts of the additives for forming an SEI are added, the additives for forming an SEI may be present in the form of an unreacted material or precipitates in the composition for a gel polymer electrolyte at room temperature. Accordingly, a side reaction may occur in which life or resistance characteristics of the secondary battery are degraded.

### Gel Polymer Electrolyte

Also, in the present invention, a gel polymer electrolyte formed by polymerization of the composition for a gel polymer electrolyte is provided.

A conventional polymerization method may be used as a polymerization method for preparing the gel polymer electrolyte of the present invention without limitation.

For example, i) after preparing a composition for a gel polymer electrolyte which includes a lithium salt, an organic solvent, a polymerization initiator, the oligomer represented by Formula 1, and, opt ionall y, an oxygen scavenger and/or additional additives, a gel polymer electrolyte including a polymer matrix may be prepared by injecting the composition into a battery and performing a thermal polymerization reaction.

Also, ii) after forming a polymer matrix by performing a polymerization reaction on the oligomer represented by Formula 1 in the presence of a polymerization initiator in an electrochemical device, a gel polymer electrolyte may be prepared by further impregnation with a non-aqueous electrolyte solution including a lithium salt and an organic solvent.

In this case, the polymerization reaction may be performed through a heating, electron beam (e-beam), or γ-ray process, and, specifically, a thermal polymerization method is preferable in which heating is performed in a temperature range of 50°C to 100°C for about 1 hour to about 8 hours.

The radical polymerization for the gelation may be performed under an inert condition in which a concentration of oxygen, as a radical scavenger, is low. Also, in a case in which the oxygen scavenger is further included in the gel polymer electrolyte composition of the present invention, the polymerization reaction for preparing the gel polymer electrolyte may be performed in the presence of normal air or oxygen. That is, since the oxygen scavenger included in the gel polymer electrolyte improves reactivity of the oligomers by reducing the influence of the oxygen during the polymerization reaction, an extent of reaction may be increased to such a degree that a large amount of unreacted monomer is almost not present even in a normal air or oxygen atmosphere. As a result, disadvantages, such as charge and discharge performance degradation that occurs while the unreacted monomer typically remains in the battery, may be improved. Particularly, the oxygen scavenger may further provide a flame retardant strengthening effect of the gel polymer electrolyte by containing a flame retardant functional group.

### Lithium Secondary Battery

Furthermore, in an embodiment of the present invention, a lithium secondary battery including a positive electrode, a negative electrode, a separator, and the gel polymer electrolyte of the present invention may be provided.

In this case, the lithium secondary battery of the present invention may be prepared by injecting the composition for a gel polymer electrolyte of the present invention into an electrode assembly formed by sequentially stacking the positive electrode, the negative electrode, and the separator **optionally** disposed between the positive electrode and the negative electrode and then curing the composition for a gel polymer electrolyte.

In this case, those prepared by typical methods during the preparation of a lithium secondary battery may be used as the positive electrode, negative electrode, and separator which constitute the electrode assembly.

### (1) Positive Electrode

The positive electrode may be prepared by forming a positive electrode material mixture layer on a positive electrode collector. The positive electrode material mixture layer may be prepared by coating the positive electrode collector with a positive electrode active material slurry including a positive electrode active material, a binder, a conductive agent, and a solvent, and then drying and rolling the coated positive electrode collector.

The positive electrode collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

The positive electrode active material is a compound capable of reversibly intercalating and deintercalating lithium, wherein the positive electrode active material may specifically include a lithium composite metal oxide including lithium and at least one metal such as cobalt, manganese, nickel, or aluminum. More specifically, the lithium composite metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{z}O₄ (where 0<Z<2), etc.), lithium-nickel-cobalt-based oxide (e.g., LiNi_{1-Y1}Co_{Y1}O₂ (where 0<Y1<1), etc.), lithium-manganese-cobalt-based oxide (e.g. , LiCo_{1-Y2}Mn_{Y2}O₂ (where 0<Y2<1) , LiMn_{2-Z1}Co_{z1}O₄ (where 0<Z1<2), etc.), lithium-nickel-manganese-cobalt-based oxide (e.g., Li(NiₚCo_{q}Mnᵣ₁)O₂ (where 0<p<1, 0<q<1, 0<r1<1, and p+q+r1=1) or Li(Niₚ₁Co_{q1}Mnᵣ₂)O₄ (where 0<pl<2, 0<ql<2, 0<r2<2, and p1+q1+r2=2), etc.), or lithium-nickel-cobalt-transition metal (M) oxide (e.g., Li(Niₚ₂Co_{q2}Mnᵣ₃M_{S2})O₂ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are atomic fractions of each independent elements, wherein 0<p2<1, 0<q2<1, 0<r3<1, 0<S2<1, and p2+q2+r3+S2=1), etc.), and any one thereof or a compound of two or more thereof may be included.

Among these materials, in terms of the improvement of capacity characteristics and stability of the battery, the lithium composite metal oxide may include LiCoO₂, LiMnO₂, LiNiO₂, lithium nickel manganese cobalt oxide (e.g., Li(Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂), or lithium nickel cobalt aluminum oxide (e.g., LiNi_{0.8}Co_{0.15}Al_{0.05}O₂, etc.).

The positive electrode active material may be included in an amount of 80 wt% to 99 wt% based on a total weight of solid content in the positive electrode active material slurry.

The binder is a component that assists in the binding between the active material and the conductive agent and in the binding with the current collector, wherein the binder is commonly added in an amount of 1 wt% to 30 wt% based on the total weight of the solid content in the positive electrode active material slurry. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene termonomer (EPDM), a sulfonated EPDM, a styrene-butadiene rubber, a fluoro rubber, various copolymers, and the like.

The conductive agent is commonly added in an amount of 1 wt% to 30 wt% based on the total weight of the solid content in the positive electrode active material slurry.

The conductive agent is not particularly limited as long as it has conductivity without causing adverse chemical changes in the battery, and, for example, a conductive material, such as: carbon powder such as carbon black, acetylene black (or Denka black), Ketjen black, channel black, furnace black, lamp black, or thermal black; graphite powder such as natural graphite with a well-developed crystal structure, artificial graphite, or graphite; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The solvent may include an organic solvent, such as N-methyl-2-pyrrolidone (NMP), and may be used in an amount such that desirable viscosity is obtained when the positive electrode active material as well as optionally the binder and the conductive agent are included. For example, the solvent may be included in an amount such that a concentration of the solid content in the slurry including the positive electrode active material as well as optionally the binder and the conductive agent is in a range of 50 wt% to 95 wt%, for example, 70 wt% to 90 wt%.

### (2) Negative Electrode

Also, the negative electrode may be a metal electrode in which a metal or metalloid thin film is used alone, or may have a structure in which the metal or metalloid thin film is stacked on a negative electrode collector.

In this case, the metal or metalloid may include at least one selected from the group consisting of lithium (Li), copper (Cu), nickel (Ni), sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), tin (Sn), silver (Ag), platinum (Pt), and gold (Au).

In addition to using the metal electrode alone or having the structure in which the metal or metalloid thin film is stacked on the negative electrode collector, one prepared by forming a negative electrode material mixture layer on the negative electrode collector may also be used as the negative electrode.

The negative electrode material mixture layer may be formed by coating the negative electrode collector with a slurry including a negative electrode active material, a binder, a conductive agent, and a solvent, and then drying and rolling the coated negative electrode collector.

The negative electrode collector generally has a thickness of 3 um to 500 um. The negative electrode collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

Furthermore, the negative electrode active material may further include at least one selected from the group consisting of a carbon material capable of reversibly intercalating/deintercalating lithium ions, a metal composite oxide, a material which may be doped and undoped with lithium, and a transition metal oxide.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes.

One selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0≤ x≤ 1), LiₓWO₂ (0≤ x≤ 1), and SnₓMe₁₋ₓMe' _{y}O_{z} (Me: manganese (Mn), Fe, Pb, or Ge; Me': Al, boron (B), phosphorus (P), Si, Groups I, II and III elements of the periodic table, or halogen; 0<xt≤1; 1≤ y≤3; 1≤z≤8) may be used as the metal composite oxide.

The material, which may be doped and undoped with lithium, may include Si, SiOₓ (0<x≤2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO₂, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and at least one thereof may also be used. The element Y may be selected from the group consisting of Mg, Ca, Sr, Ba, Ra, scandium (Sc), yttrium (Y), Ti, zirconium (Zr), hafnium (Hf), rutherfordium (Rf), V, niobium (Nb), Ta, dubnium (Db), Cr, Mo, tungsten (W), seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, gallium (Ga), Sn, In, Ge, P, arsenic (As), Sb, bismuth (Bi), sulfur (S), selenium (Se), tellurium (Te), polonium (Po), and a combination thereof.

The transition metal oxide may include lithiumcontaining titanium composite oxide (LTO), vanadium oxide, and lithium vanadium oxide.

The negative electrode active material may be included in an amount of 80 wt% to 99 wt% based on a total weight of solid content in the negative electrode slurry.

The binder is a component that assists in the binding between the conductive agent, the active material, and the current collector, wherein the binder is commonly added in an amount of 1 wt% to 30 wt% based on the total weight of the solid content in the negative electrode slurry. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer (EPDM), a sulfonated EPDM, a styrene-butadiene rubber, a fluoro rubber, and various copolymers thereof.

The conductive agent is a component for further improving the conductivity of the negative electrode active material, wherein the conductive agent may be added in an amount of 1 wt% to 20 wt% based on the total weight of the solid content in the negative electrode slurry. One, which is the same as or different from the conductive agent used during the preparation of the positive electrode, may be used as the conductive agent, and, for example, a conductive material, such as: carbon powder such as carbon black, acetylene black (or Denka black), Ketjen black, channel black, furnace black, lamp black, or thermal black; graphite powder such as natural graphite with a well-developed crystal structure, artificial graphite, or graphite; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The solvent may include water or an organic solvent, such as NMP and alcohol, and may be used in an amount such that desirable viscosity is obtained when the negative electrode active material as well as optionally the binder and the conductive agent are included. For example, the solvent may be included in an amount such that a concentration of the solid content including the negative electrode active material as well as optionally the binder and the conductive agent is in a range of 50 wt% to 95 wt%, for example, 70 wt% to 90 wt%.

### (3) Separator

Also, the separator plays a role in blocking an internal short circuit between both electrodes and impregnating the electrolyte, wherein, after mixing a polymer resin, a filler, and a solvent to prepare a separator composition, the separator composition is directly coated on the electrode and dried to form a separator film, or, after the separator composition is cast on a support and dried, the separator may be prepared by laminating a separator film peeled from the support on the electrode.

A typically used porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith as the separator. Also, a typical porous nonwoven fabric, for example, a nonwoven fabric formed of high melting point glass fibers or polyethylene terephthalate fibers may be used, but the present invention is not limited thereto.

In this case, the porous separator may generally have a pore diameter of 0.01 µm to 50 µm and a porosity of 5% to 95%. Also, the porous separator may generally have a thickness of 5 µm to 300 µm.

A shape of the lithium secondary battery of the present invention is not particularly limited, but a cylindrical type using a can, a prismatic type, a pouch type, or a coin type may be used.

Hereinafter, the present invention will be described in more detail according to examples. However, the invention may be embodied in many different forms and should not be construed as being limited to the embodiments set forth herein. Rather, these example embodiments are provided so that this description will be thorough and complete, and will fully convey the scope of the present invention to those skilled in the art.

### Examples

### Example 1.

### (Preparation of Composition for Gel Polymer Electrolyte)

After a carbonate-based organic solvent (EC:DMC=1:9 volume ratio) and dimethoxyethane (monoglyme, DME) were mixed in a weight ratio of 1:9, a non-aqueous organic solvent was prepared by dissolving LiFSI to have a concentration of 2.8 M. Thereafter, a composition for a gel polymer electrolyte was prepared by adding 3 g of the oligomer represented by Formula 1a (weight-average molecular weight (Mw) 6,000, z1=10, x1=10, y1=5, o1=2) and 0.006 g of AIBN, as a polymerization initiator, to 96.994 g of the non-aqueous organic solvent (see Table 1 below).

### (Secondary Battery Preparation)

A positive electrode active material (LiNi_{1/3} Co_{1/3}Mn_{1/3}O₂; NCM), a conductive agent (carbon black), and a binder (polyvinylidene fluoride; PVDF) were added in a weight ratio of 94:3:3 to N-methyl-2-pyrrolidone (NMP), as a solvent, to prepare a positive electrode active material slurry. An about 20 um thick aluminum (Al) thin film, as a positive electrode collector, was coated with the positive electrode active material slurry and dried, and the coated Al thin film was then roll-pressed to prepare a positive electrode.

A 10 um thick copper (Cu) was used as a negative electrode collector, and Li metal was roll-pressed on the negative electrode collector to adjust the thickness to 20 um so that a Li metal electrode having a total thickness of 30 um was prepared.

After an electrode assembly was prepared by sequentially stacking the positive electrode, a separator formed of three layers of polypropylene/polyethylene/polypropylene (PP/PE/PP), and the Li metal electrode, the assembled electrode assembly was accommodated in a battery case, the composition for a gel polymer electrolyte was injected thereinto, and aging was then performed for 2 days. Thereafter, curing was performed at 70°C for 5 hours to prepare a lithium secondary battery including a thermally polymerized gel polymer electrolyte.

### Example 2.

### (Preparation of Composition for Gel Polymer Electrolyte)

After a carbonate-based organic solvent (EC:DMC=1:9 volume ratio) and dimethoxyethane (monoglyme, DME) were mixed in a weight ratio of 9:1, a non-aqueous organic solvent was prepared by dissolving LiFSI to have a concentration of 2.8 M. Thereafter, a composition for a gel polymer electrolyte was prepared by adding 3 g of the oligomer represented by Formula 1a (weight-average molecular weight (Mw) 6,000, z1=10, x1=10, y1=5, o1=2) and 0.006 g of AIBN, as a polymerization initiator, to 96.994 g of the non-aqueous organic solvent (see Table 1 below).

### (Secondary Battery Preparation)

A lithium secondary battery including a gel polymer electrolyte was prepared in the same manner as in Example 1 except that the above-prepared composition for a gel polymer electrolyte was used instead of the composition for a gel polymer electrolyte of Example 1.

### Example 3.

### (Preparation of Composition for Gel Polymer Electrolyte)

After dimethyl carbonate (DMC) and dimethoxyethane (monoglyme, DME) were mixed in a weight ratio of 1:9, a non-aqueous organic solvent was prepared by dissolving LiFSI to have a concentration of 3.4 M. Thereafter, a composition for a gel polymer electrolyte was prepared by adding 0.1 g of the oligomer represented by Formula 1a (weight-average molecular weight (Mw) 6,000, z1=10, x1=10, y1=5, o1=2) and 0.0002 g of AIBN, as a polymerization initiator, to 99.8998 g of the non-aqueous organic solvent (see Table 1 below).

### (Secondary Battery Preparation)

A lithium secondary battery including a gel polymer electrolyte was prepared in the same manner as in Example 1 except that the above-prepared composition for a gel polymer electrolyte was used instead of the composition for a gel polymer electrolyte of Example 1.

### Example 4.

### (Preparation of Composition for Gel Polymer Electrolyte)

After dimethyl carbonate (DMC) and dimethoxyethane (monoglyme, DME) were mixed in a weight ratio of 1:9, a non-aqueous organic solvent was prepared by dissolving LiFSI to have a concentration of 3.4 M. Thereafter, a composition for a gel polymer electrolyte was prepared by adding 80 g of the oligomer represented by Formula 1a (weight-average molecular weight (Mw) 6,000, z1=10, x1=10, y1=5, o1=2) and 0.16 g of AIBN to 19.84 g of the non-aqueous organic solvent (see Table 1 below).

### (Secondary Battery Preparation)

A lithium secondary battery including a gel polymer electrolyte was prepared in the same manner as in Example 1 except that the above-prepared composition for a gel polymer electrolyte was used instead of the composition for a gel polymer electrolyte of Example 1.

### Example 5.

### (Preparation of Composition for Gel Polymer Electrolyte)

A non-aqueous organic solvent was prepared by dissolving LiFSI in dimethoxyethane (monoglyme, DME) to have a concentration of 3.4 M. Thereafter, a composition for a gel polymer electrolyte was prepared by adding 5 g of the oligomer represented by Formula 1a (weight-average molecular weight (Mw) 6,000, z1=10, x1=10, y1= 5, o1=2), 1 g of tris-2,2,2-trifluoroethyl phosphite (TFEPi), as an oxygen scavenger, and 0.01 g of AIBN to 93.99 g of the non-aqueous organic solvent (see Table 1 below).

### (Secondary Battery Preparation)

A lithium secondary battery including a gel polymer electrolyte was prepared in the same manner as in Example 1 except that the above-prepared composition for a gel polymer electrolyte was used instead of the composition for a gel polymer electrolyte of Example 1.

### Example 6.

### (Preparation of Composition for Gel Polymer Electrolyte)

A non-aqueous organic solvent was prepared by dissolving LiFSI in tetraglyme (TEGDME) to have a concentration of 3.4 M. Thereafter, a composition for a gel polymer electrolyte was prepared by adding 3 g of the oligomer represented by Formula 1a (weight-average molecular weight (Mw) 6,000, z1=10, x1=10, y1=5, o1=2) and 0.006 g of AIBN to 96.994 g of the non-aqueous organic solvent (see Table 1 below).

### (Secondary Battery Preparation)

A lithium secondary battery including a gel polymer electrolyte was prepared in the same manner as in Example 1 except that the above-prepared composition for a gel polymer electrolyte was used instead of the composition for a gel polymer electrolyte of Example 1.

### Example 7.

### (Preparation of Composition for Gel Polymer Electrolyte)

A non-aqueous organic solvent was prepared by dissolving LiFSI in dimethoxyethane (monoglyme, DME) to have a concentration of 3.4 M. Thereafter, a composition for a gel polymer electrolyte was prepared by adding 3 g of the oligomer represented by Formula 1b (weight-average molecular weight (Mw) 5,300, z1=10, x1=10, y1=5, o1=2) and 0.006 g of AIBN to 96.994 g of the non-aqueous organic solvent (see Table 1 below).

### (Secondary Battery Preparation)

A lithium secondary battery was prepared in the same manner as in Example 1 except that the above composition for a gel polymer electrolyte was used instead of the composition for a gel polymer electrolyte of Example 1.

### Example 8.

### (Preparation of Composition for Gel Polymer Electrolyte)

After dimethyl carbonate (DMC) and dimethoxyethane (monoglyme, DME) were mixed in a weight ratio of 5:5, a non-aqueous organic solvent was prepared by dissolving LiFSI to have a concentration of 2.8 M. Thereafter, a composition for a gel polymer electrolyte was prepared by adding 3 g of the oligomer represented by Formula 1a (weight-average molecular weight (Mw) 6,000, z1=10, x1=10, y1=5, o1=2) and 0.006 g of AIBN to 96.994 g of the non-aqueous organic solvent (see Table 1 below).

### (Secondary Battery Preparation)

A lithium secondary battery including a gel polymer electrolyte was prepared in the same manner as in Example 1 except that the above-prepared composition for a gel polymer electrolyte was used instead of the composition for a gel polymer electrolyte of Example 1.

### Example 9.

### (Preparation of Composition for Gel Polymer Electrolyte)

After a carbonate-based organic solvent (EC:DMC=1:9 volume ratio) and dimethoxyethane (monoglyme, DME) were mixed in a weight ratio of 99:1, a non-aqueous organic solvent was prepared by dissolving LiFSI to have a concentration of 2.8 M. Thereafter, a composition for a gel polymer electrolyte was prepared by adding 3 g of the oligomer represented by Formula 1a (weight-average molecular weight (Mw) 6,000, z1=10, x1=10, y1=5, o1=2) and 0.006 g of AIBN, as a polymerization initiator, to 96.994 g of the non-aqueous organic solvent (see Table 1 below).

### (Secondary Battery Preparation)

A lithium secondary battery including a gel polymer electrolyte was prepared in the same manner as in Example 1 except that the above-prepared composition for a gel polymer electrolyte was used.

### Comparative Example 1.

### (Preparation of Composition for Gel Polymer Electrolyte)

After ethylene carbonate and dimethyl carbonate were mixed in a volume ratio of 1:9, a non-aqueous organic solvent was prepared by dissolving LiFSI to have a concentration of 2.8 M. Thereafter, a composition for a gel polymer electrolyte was prepared by adding 3 g of the oligomer represented by Formula 1a (weight-average molecular weight (Mw) 6,000, z1=10, x1=10, y1=5, o1=2) and 0.006 g of AIBN, as a polymerization initiator, to 96.994 g of the non-aqueous organic solvent (see Table 1 below).

### (Secondary Battery Preparation)

A lithium secondary battery including a gel polymer electrolyte was prepared in the same manner as in Example 1 except that the above-prepared composition for a gel polymer electrolyte was used instead of the composition for a gel polymer electrolyte of Example 1.

### Comparative Example 2.

### (Preparation of Composition for Gel Polymer Electrolyte)

After ethylene carbonate and dimethyl carbonate were mixed in a volume ratio of 1:9, a non-aqueous organic solvent was prepared by dissolving LiFSI to have a concentration of 2.8 M. Thereafter, a composition for a gel polymer electrolyte was prepared by adding 3 g of an ethylene oxide monomer (weight-average molecular weight (Mw) 5,000) and 0.006 g of AIBN, as a polymerization initiator, to 96.994 g of the non-aqueous organic solvent (see Table 1 below).

### (Secondary Battery Preparation)

A lithium secondary battery including a gel polymer electrolyte was prepared in the same manner as in Comparative Example 1 except that the above-prepared composition for a gel polymer electrolyte was used.

### Comparative Example 3.

### (Preparation of Composition for Gel Polymer Electrolyte)

After a carbonate-based organic solvent (EC:DMC=3:7 volume ratio) and methyl acetate (MA) were mixed in a weight ratio of 5:5, a non-aqueous organic solvent was prepared by dissolving LiFSI to have a concentration of 2.8 M. Thereafter, a composition for a gel polymer electrolyte was prepared by adding 3 g of the oligomer represented by Formula 1a (weight-average molecular weight (Mw) 6,000, z1=10, x1=10, y1=5, o1=2) and 0.006 g of AIBN, as a polymerization initiator, to 96.994 g of the non-aqueous organic solvent (see Table 1 below).

### (Secondary Battery Preparation)

A lithium secondary battery including a gel polymer electrolyte was prepared in the same manner as in Comparative Example 1 except that the above-prepared composition for a gel polymer electrolyte was used.

### Comparative Example 4.

### (Preparation of Composition for Gel Polymer Electrolyte)

A non-aqueous organic solvent was prepared by dissolving LiFSI in dimethoxyethane (monoglyme, DME) to have a concentration of 3.4 M. Thereafter, a composition for a gel polymer electrolyte was prepared by adding 3 g of an ethylene oxide monomer (weight-average molecular weight (Mw) 5,000), instead of the oligomer represented by Formula 1a, and 0.006 g of AIBN to 96.994 g of the non-aqueous organic solvent (see Table 1 below).

### (Secondary Battery Preparation)

A lithium secondary battery including a gel polymer electrolyte was prepared in the same manner as in Example 1 except that the above-prepared composition for a gel polymer electrolyte was used.

### Comparative Example 5.

### (Preparation of Composition for Gel Polymer Electrolyte)

After a carbonate-based organic solvent (EC:DMC=1:9 volume ratio), dimethoxyethane (monoglyme, DME), and dioxolane were mixed in a weight ratio of 3:3:4, a non-aqueous organic solvent was prepared by dissolving LiFSI to have a concentration of 2.8 M. Thereafter, a composition for a gel polymer electrolyte was prepared by adding 3 g of the oligomer represented by Formula 1a (weight-average molecular weight (Mw) 6,000, z1=10, x1=10, y1=5, o1=2) and 0.006 g of AIBN, as a polymerization initiator, to 96.994 g of the non-aqueous organic solvent (see Table 1 below).

### (Secondary Battery Preparation)

A lithium secondary battery including a gel polymer electrolyte was prepared in the same manner as in Example 1 except that the above-prepared composition for a gel polymer electrolyte was used.

In the following Table 1, the abbreviation of each compound has the following meaning.
EC: ethylene carbonate
DMC: dimethyl carbonate
DME: dimethoxyethane (monoglyme)
TEGDME: tetraglyme
MA: methyl acetate
EO: ethylene oxide

**[Table 1]**

| | Lithium salt | | organic solvent | | | | | Oligomer | | | Amount of oxygen soaveng er added | Amount of polymer ization initiat or added |
|---|---|---|---|---|---|---|---|---|---|---|---|---|
| | Concentration | Type | First solvent: Carbonate-based solvent | Second solvent; Glyme-based solvent | Second solvent: Other solvents | Weight ratio of first solvent:seco nd solvent | Total addition amount | Formula | Weight-average molecular weight | Addition amount | | |
| | | | | | | | (g) | | (Mw) | (g) | (g) | (g) |
| Example 1 | 2.8 | LiFSI | EC:DMC = 19 | DME | - | 1:9 | 96.994 | 1a | 6,000 | 3 | - | 0.006 |
| | | | Volume ratio | | | | | | | | | |
| Example 2 | 2.8 | LiFSI | EC:DMC = 1:9 | DME | - | 9:1 | 96.994 | 1a | 6,000 | 3 | - | 0.006 |
| | | | Volume ratio | | | | | | | | | |
| Example 3 | 3.4 | LiFSI | DMC | DME | - | 1:9 | 99.8998 | 1a | 6,000 | 0.1 | - | 0.0002 |
| Example 4 | 3.4 | LiFSI | DMC | DME | - | 1:9 | 19.84 | 1a | 6,000 | 80 | - | 0.16 |
| Example 5 | 3.4 | LiFSI | - | DME | - | 0:10 | 93.99 | 1a | 6,000 | 5 | 1 | 0.01 |
| Example 6 | 3.4 | LiFSI | - | TEGDME | - | 0:10 | 96.994 | 1a | 6,000 | 3 | - | 0.006 |
| Example 7 | 3.4 | LiFSI | - | DME | - | 0:10 | 96.994 | 1b | 5,300 | 3 | - | 0.006 |
| Example 8 | 2.8 | LiFSI | DMC | DME | - | 5:5 | 96.994 | 1a | 6,000 | 3 | - | 0.006 |
| Example 9 | 2.8 | LiFSI | EC:DMC = 1:9 | DME | - | 99:1 | 96.994 | la | 6,000 | 3 | - | 0.006 |
| | | | Volume ratio | | | | | | | | | |
| Comparative Example 1 | 2.8 | LiFSI | EC:DMC = 1:9 | - | - | 10:0 | 96.994 | 1a | 6,000 | 3 | - | 0.006 |
| | | | Volume ratio | | | | | | | | | |
| Comparative Example 2 | 2.8 | LiFSI | EC:DMC = 1:9 | - | - | 10:0 | 96.994 | EO | 5,000 | 3 | - | 0.006 |
| | | | volume ratio | | | | | Monomer | | | | |
| Comparative Example 3 | 2.8 | LiFSI | EC:DMC =3:7 | - | MA | 5:5 | 96.994 | 1a | 6,000 | 3 | - | - 0.006 |
| | | | Volume ratio | | | | | | | | | |
| Comparative Example 4 | 3.4 | LiFSI | - | DME | - | 0:10 | 96.994 | EO | 5,000 | 3 | - | 0.006 |
| | | | | | | | | Monomer | | | | |
| Comparative Example 5 | 2.8 | LiFSI | EC:DMC = 1:9 | DME | Dioxolane | 3:3:4 | 96.994 | 1a | 6,000 | 3 | - | 0.006 |
| | | | Volume ratio | | | | | | | | | |

### Experimental Examples

### Experimental Example 1: Oxidation Stability Evaluation

Electrochemical (oxidation) stabilities of the secondary batteries prepared in Examples 1 to 9 and the secondary batteries prepared in Comparative Examples 1 to 5 were measured using linear sweep voltammetry (LSV). A potentiostat (EG&G, model 270A) was used as a measuring device, and measurement temperature was 60°C. The results thereof are presented in Table 2 below.

**[Table 2]**

| | Oxidation stability (V) @60°C |
|---|---|
| Example 1 | 4.77 |
| Example 2 | 4.72 |
| Example 3 | 4.64 |
| Example 4 | 5.24 |
| Example 5 | 4.91 |
| Example 6 | 4.86 |
| Example 7 | 4.69 |
| Example 8 | 4.69 |
| Example 9 | 4.52 |
| Comparative Example 1 | 4.39 |
| Comparative Example 2 | 3.88 |
| Comparative Example 3 | 4.27 |
| Comparative Example 4 | 3.96 |
| Comparative Example 5 | 4.35 |

Referring to Table 2, since the secondary batteries prepared in Examples 1 to 9 of the present invention had an oxidation initiation voltage of about 4.52 V or more, it was confirmed that the secondary batteries prepared in Examples 1 to 9 exhibited excellent oxidation stabilities. In contrast, with respect to the secondary batteries of Comparative Examples 1 to 5, it may be understood that oxidation initiation voltages were less than about 4.39 V, which was lower than those of the secondary batteries of Examples 1 to 9.

From these results, it may be confirmed that the oxidation stabilities of the secondary batteries of Examples 1 to 9 including the gel polymer electrolyte of the present invention were improved in comparison to those of the secondary batteries of Comparative Examples 1 to 5.

It may be understood that the oxidation stability of the secondary battery of Example 9, in which the amount of the carbonate-based solvent was greater than that of the glyme-based solvent, was relatively lower than those of the secondary batteries of Examples 1 to 8.

### Experimental Example 2. Tensile Strength Evaluation

Specimens were prepared by using the compositions for a gel polymer electrolyte of Examples 1, 2, and 4 to 8 and the compositions for a gel polymer electrolyte of Comparative Examples 1 to 4, and tensile strengths of these specimens were then measured.

The specimens were collectively prepared according to ASTM standard D638 (Type V specimens), and the tensile strength was measured at a rate of 5 mm per minute at 25°C and a relative humidity of about 30% using Lloyd LR-10K. The results thereof are presented in Table 3 below.

**[Table 3]**

| | Tensile strength (MPa) |
|---|---|
| Example 1 | 2.4 |
| Example 2 | 1.9 |
| Example 4 | 9 |
| Example 5 | 5 |
| Example 6 | 3.2 |
| Example 7 | 1.2 |
| Example 8 | 2.3 |
| Comparative Example 1 | 0.6 |
| Comparative Example 2 | 0.7 |
| Comparative Example 3 | 0.75 |
| Comparative Example 4 | 0.9 |

Referring to Table 3, it may be confirmed that the tensile strengths of the gel polymer electrolyte specimens prepared in Comparative Examples 1 to 4 were mostly 1 MPa or less, but the tensile strengths of the gel polymer electrolyte specimens prepared in Examples 1, 2, and 4 to 8 were 1.2 MPa or more. Furthermore, in a case in which the amount of the oligomer was large as in Example 4, it may be understood that the tensile strength of the gel polymer electrolyte specimen was further improved.

Thus, it may be understood that mechanical strengths of the gel polymer electrolytes prepared in Examples 1, 2, and 4 to 8 of the present invention were improved in comparison to those of the gel polymer electrolytes prepared in Comparative Examples 1 to 4.

### Experimental Example 3. Ionic Conductivity Evaluation

Specimens were prepared by using the compositions for a gel polymer electrolyte of Examples 1 to 9 and the compositions for a gel polymer electrolyte of Comparative Examples 1 to 5. The specimens were collectively prepared according to ASTM standard D638 (Type V specimens).

Subsequently, a circular gold (Au) electrode having a diameter of 1 mm was coated on the specimens using a sputtering method, and ionic conductivity was measured at 25°C by using an alternating current impedance method. The ionic conductivity was measured in a frequency range of 0.1 Hz to 100 MHz using a VMP3 measurement instrument and a precision impedance analyzer (4294A). The measurement results are presented in Table 4 below.

**[Table 4]**

| | Ionic conductivity (mS/cm) |
|---|---|
| Example 1 | 6.6 |
| Example 2 | 6.2 |
| Example 3 | 7.1 |
| Example 4 | 5.3 |
| Example 5 | 6.5 |
| Example 6 | 6.8 |
| Example 7 | 6.95 |
| Example 8 | 6.3 |
| Example 9 | 4.8 |
| Comparative Example 1 | 4.4 |
| Comparative Example 2 | 2.3 |
| Comparative Example 3 | 3.9 |
| Comparative Example 4 | 3.4 |
| Comparative Example 5 | 4.9 |

Referring to Table 4, ionic conductivities of the gel polymer electrolytes prepared in Examples 1 to 8 were 5.3 mS/cm or more, wherein it may be understood that the ionic conductivities were improved in comparison to those of the gel polymer electrolytes of Comparative Examples 1 to 5. With respect to the secondary battery of Example 9 in which the amount of the carbonate-based solvent was greater than that of the glyme-based solvent, it may be understood that ionic conductivity was lower than those of the secondary batteries of Examples 1 to 8.

The above descriptions are merely exemplary embodiments for preparing the gel polymer electrolyte according to the present invention and the secondary battery including the same, so that the present invention is not limited thereto. The true scope of the present invention should be defined to the extent that those skilled in the art can make various modifications and changes thereto without departing from the scope of the invention, as defined by the appended claims.

## Claims

1. A composition for a gel polymer electrolyte, the composition comprising:
a lithium salt,
a non-aqueous organic solvent including a glyme-based solvent,
an oligomer represented by Formula 1, and
a polymerization initiator;
wherein the glyme-based solvent comprises at least one selected from the group consisting of dimethoxyethane (monoglyme), diglyme, and tetraglyme: 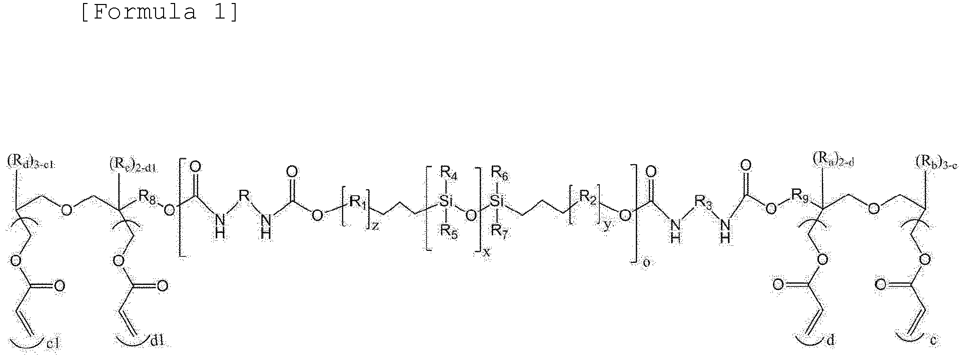 wherein, in Formula 1,
R₁ is an alkylene group having 1 to 5 carbon atoms or - R₁'-O-, wherein R₁' is an alkylene group having 1 to 5 carbon atoms,
R₂ is an alkylene group having 1 to 5 carbon atoms or - O-R₂'-, wherein R₂' is an alkylene group having 1 to 5 carbon atoms,
R₄, R₅, R₆, and R₇ are each independently hydrogen or an alkyl group having 1 to 3 carbon atoms,
R and R₃ are each independently an aliphatic hydrocarbon group or an aromatic hydrocarbon group,
each of R₈ and R₉ is an alkylene group having 1 to 5 carbon atoms,
Rₐ, R_{b}, R_{c}, and R_{d} are each independently hydrogen or an alkyl group having 1 to 3 carbon atoms,
x, y, z, and o are each independently an integer of 1 to 100,
c and c1 are each independently an integer of 1 to 3, and
d and d1 are each independently an integer of 0 to 2.

2. The composition for a gel polymer electrolyte of claim 1, wherein the non-aqueous organic solvent further comprises a carbonate-based organic solvent.

3. The composition for a gel polymer electrolyte of claim 2, wherein a weight ratio of the glyme-based solvent to the carbonate-based organic solvent is in a range of 1:9 to 9:1.

4. The composition for a gel polymer electrolyte of claim 1, wherein, in Formula 1, R₁ is -R₁'-O-, wherein R₁' is an alkylene group having 1 to 5 carbon atoms, R₂ is -O-R₂'-, wherein R₂' is an alkylene group having 1 to 5 carbon atoms, R₄, R₅, R₆, and R₇ are each independently an alkyl group having 1 to 3 carbon atoms, R₈ and R₉ are each independently an alkylene group having 1 to 3 carbon atoms, and Rₐ, R_{b}, R_{c}, and R_{d} are each independently hydrogen.

5. The composition for a gel polymer electrolyte of claim 1, wherein, in Formula 1, R₁ is -R₁'-O-, wherein R₁' is an alkylene group having 2 to 5 carbon atoms, R₂ is -O-R₂'-, wherein R₂' is an alkylene group having 2 to 5 carbon atoms, R₄, R₅, R₆, and R₇ are each independently an alkyl group having 1 to 3 carbon atoms, R₈ and R₉ are each independently an alkylene group having 1 or 2 carbon atoms, and Rₐ, R_{b}, R_{c}, and R_{d} are each independently hydrogen.

6. The composition for a gel polymer electrolyte of claim 1, wherein the oligomer represented by Formula 1 comprises at least one selected from the group consisting of compounds represented by Formula 1a and Formula 1b, 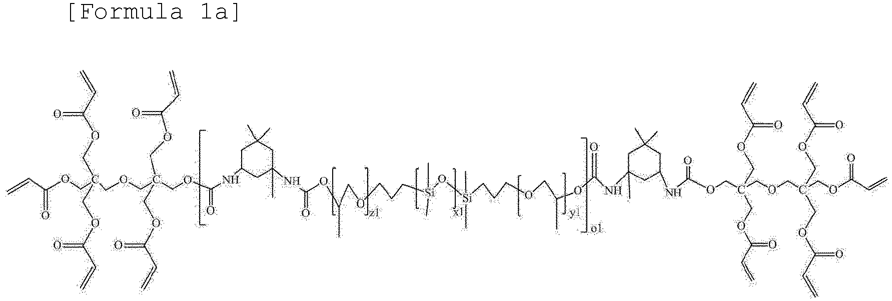 wherein, in Formula 1a,
x1, y1, z1, and o1 are each independently an integer of 1 to 100, 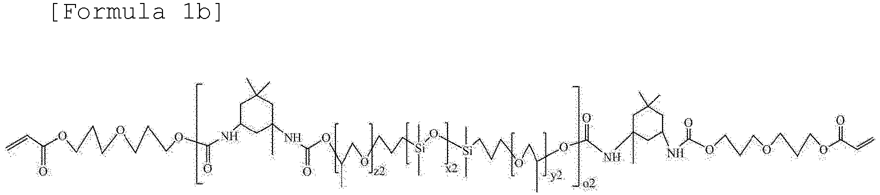 wherein, in Formula 1b,
x2, y2, z2, and o2 are each independently an integer of 1 to 100.

7. The composition for a gel polymer electrolyte of claim 1, wherein the oligomer represented by Formula 1 is included in an amount of 0.1 wt% to 80 wt% based on a total weight of the composition for a gel polymer electrolyte.

8. The composition for a gel polymer electrolyte of claim 1, further comprising an oxygen scavenger.

9. A gel polymer electrolyte prepared by polymerization of the composition for a gel polymer electrolyte of claim 1.

10. A lithium secondary battery comprising a positive electrode, a negative electrode, a separator, and the gel polymer electrolyte of claim 9.

11. The lithium secondary battery of claim 10, wherein the negative electrode is a metal electrode, which consists of a metal or a metalloid thin film, or has a structure in which the metal or the metalloid thin film is stacked on a negative electrode collector.

12. The lithium secondary battery of claim 11, wherein the metal or metalloid comprises at least one selected from the group consisting of lithium (Li), copper (Cu), nickel (Ni), sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), tin (Sn), silver (Ag), platinum (Pt), and gold (Au).

## Patentansprüche

1. Zusammensetzung für einen Gel-Polymer-Elektrolyten, wobei die Zusammensetzung umfasst:
ein Lithiumsalz,
ein nichtwässriges organisches Lösungsmittel, das ein Lösungsmittel auf Glyme-Basis umfasst,
ein durch die Formel 1 dargestelltes Oligomer und
einen Polymerisationsinitiator;
worin das Lösungsmittel auf Glyme-Basis zumindest eines umfasst, das ausgewählt ist aus der Gruppe bestehend aus Dimethoxyethan (Monoglyme), Diglyme und Tetraglyme: 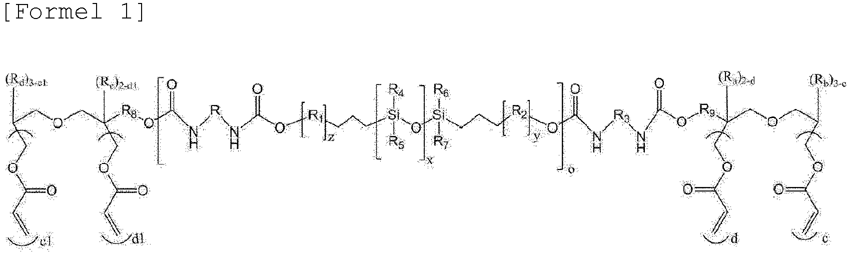 worin in der Formel 1
R₁ eine Alkylengruppe mit 1 bis 5 Kohlenstoffatomen oder -R₁'-O- ist, worin R₁' eine Alkylengruppe mit 1 bis 5 Kohlenstoffatomen ist,
R₂ eine Alkylengruppe mit 1 bis 5 Kohlenstoffatomen oder -O-R₂'- ist, worin R₂' eine Alkylengruppe mit 1 bis 5 Kohlenstoffatomen ist,
R₄, R₅, R₆ und R₇ jeweils unabhängig Wasserstoff oder eine Alkylgruppe mit 1 bis 3 Kohlenstoffatomen sind,
R und R₃ jeweils unabhängig eine aliphatische Kohlenwasserstoffgruppe oder eine aromatische Kohlenwasserstoffgruppe sind,
jedes von R₈ und R₉ eine Alkylengruppe mit 1 bis 5 Kohlenstoffatomen ist,
Rₐ, R_{b}, R_{c} und R_{d} jeweils unabhängig Wasserstoff oder eine Alkylgruppe mit 1 bis 3 Kohlenstoffatomen sind,
x, y, z und o jeweils unabhängig eine ganze Zahl von 1 bis 100 sind,
c und c1 jeweils unabhängig eine ganze Zahl von 1 bis 3 sind und
d und d1 jeweils unabhängig eine ganze Zahl von 0 bis 2 sind.

2. Zusammensetzung für einen Gel-Polymer-Elektrolyten gemäß Anspruch 1, worin das nichtwässrige organische Lösungsmittel ferner ein organisches Lösungsmittel auf Carbonatbasis umfasst.

3. Zusammensetzung für einen Gel-Polymer-Elektrolyten gemäß Anspruch 2, worin das Gewichtsverhältnis des Lösungsmittels auf Glyme-Basis zu dem organischen Lösungsmittel auf Carbonatbasis im Bereich von 1:9 bis 9:1 liegt.

4. Zusammensetzung für einen Gel-Polymer-Elektrolyten gemäß Anspruch 1, worin in der Formel 1 R₁ -R₁'-O- ist, worin R₁' eine Alkylgengruppe mit 1 bis 5 Kohlenstoffatomen ist, R₂ -O-R₂'- ist, worin R₂' eine Alkylengruppe mit 1 bis 5 Kohlenstoffatomen ist, R₄, R₅, R₆ und R₇ jeweils unabhängig eine Alkylgruppe mit 1 bis 3 Kohlenstoffatomen sind, R₈ und R₉ jeweils unabhängig eine Alkylengruppe mit 1 bis 3 Kohlenstoffatomen sind und Rₐ, R_{b}, R_{c} und R_{d} jeweils unabhängig Wasserstoff sind.

5. Zusammensetzung für einen Gel-Polymer-Elektrolyten gemäß Anspruch 1, worin in der Formel 1 R₁ -R₁'-O- ist, worin R₁' eine Alkylengruppe mit 2 bis 5 Kohlenstoffatomen ist, R₂ -O-R₂'- ist, worin R₂' eine Alkylengruppe mit 2 bis 5 Kohlenstoffatomen ist, R₄, R₅, R₆ und R₇ jeweils unabhängig eine Alkylgruppe mit 1 bis 3 Kohlenstoffatomen sind, R₈ und R₉ jeweils unabhängig eine Alkylengruppe mit 1 oder 2 Kohlenstoffatomen sind und Rₐ, R_{b}, R_{c} und R_{d} jeweils unabhängig Wasserstoff sind.

6. Zusammensetzung für einen Gel-Polymer-Elektrolyten gemäß Anspruch 1, worin das durch die Formel 1 dargestellte Oligomer zumindest eines umfasst, das ausgewählt ist aus der Gruppe bestehend aus durch die Formel 1a und die Formel 1b dargestellten Verbindungen: 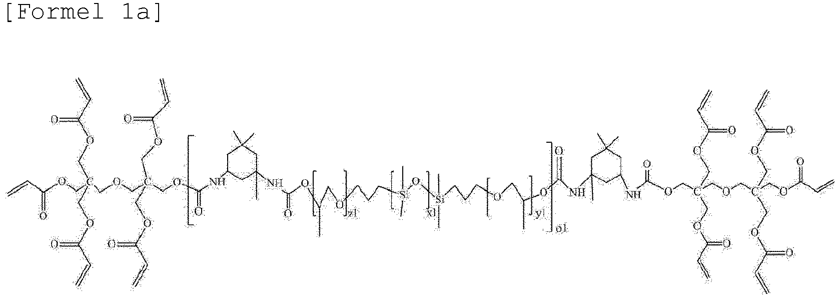 worin in der Formel 1a
x1, y1, z1 und o1 jeweils unabhängig eine ganze Zahl von 1 bis 100 sind, 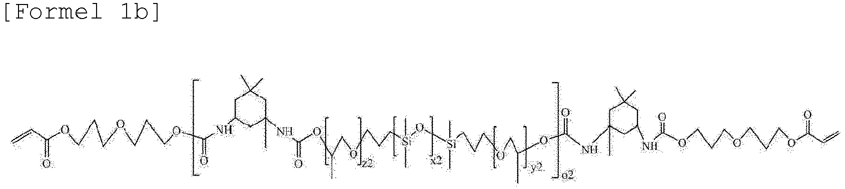 worin in der Formel 1b
x2, y2, z2 und o2 jeweils unabhängig eine ganze Zahl von 1 bis 100 sind.

7. Zusammensetzung für einen Gel-Polymer-Elektrolyten gemäß Anspruch 1, worin das durch die Formel 1 dargestellte Oligomer in einer Menge von 0,1 Gew.-% bis 80 Gew.-% umfasst ist, bezogen auf das Gesamtgewicht der Zusammensetzung für einen Gelpolymerelektrolyten.

8. Zusammensetzung für einen Gel-Polymer-Elektrolyten gemäß Anspruch 1, ferner umfassend einen Sauerstofffänger.

9. Gel-Polymer-Elektrolyt, hergestellt durch Polymerisation der Zusammensetzung für einen Gel-Polymer-Elektrolyten gemäß Anspruch 1.

10. Lithium-Sekundärbatterie, umfassend eine positive Elektrode, eine negative Elektrode, einen Separator und den Gel-Polymer-Elektrolyten gemäß Anspruch 9.

11. Lithium-Sekundärbatterie gemäß Anspruch 10, worin die negative Elektrode eine Metallelektrode ist, die aus einem Metall- oder Metalloid-Dünnfilm besteht, oder die eine Struktur aufweist, worin der Metall- oder der Metalloid-Dünnfilm auf einem negativen Stromabnehmer gestapelt ist.

12. Lithium-Sekundärbatterie gemäß Anspruch 11, worin das Metall oder das Metalloid zumindest eines umfasst, das ausgewählt ist aus der Gruppe bestehend aus Lithium (Li), Kupfer (Cu), Nickel (Ni), Natrium (Na), Kalium (K), Rubidium (Rb), Cäsium (Cs), Francum (Fr), Beryllium (Be), Magnesium (Mg), Calcium (Ca), Strontium (Sr), Silicium (Si), Antimon (Sb), Blei (Pb), Indium (In), Zink (Zn), Barium (Ba), Radium (Ra), Germanium (Ge), Aluminium (Al), Zinn (Sn), Silber (Ag), Platin (Pt) und Gold (Au).

## Revendications

1. Composition pour un électrolyte polymère en gel, la composition comprenant :
un sel de lithium,
un solvant organique non aqueux incluant un solvant à base de glyme,
un oligomère représenté par la Formule 1, et
un initiateur de polymérisation ;
dans laquelle le solvant à base de glyme comprend au moins un choisi dans le groupe constitué de diméthoxyéthane (monoglyme), diglyme, et tétraglyme : 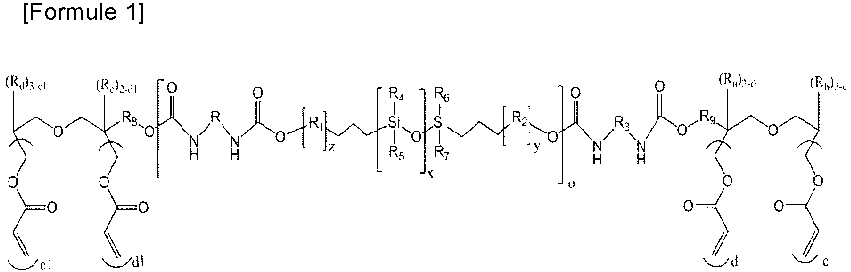 dans laquelle, dans la Formule 1,
R₁ est un groupe alkylène ayant 1 à 5 atomes de carbone ou -R₁'-O-, dans laquelle R₁' est un groupe alkylène ayant 1 à 5 atomes de carbone,
R₂ est un groupe alkylène ayant 1 à 5 atomes de carbone ou -O-R₂'-, dans laquelle R₂' est un groupe alkylène ayant 1 à 5 atomes de carbone,
R₄, R₅, R₆ et R₇ sont chacun indépendamment l'hydrogène ou un groupe alkyle ayant 1 à 3 atomes de carbone,
R et R₃ représentent chacun indépendamment un groupe hydrocarbure aliphatique ou un groupe hydrocarbure aromatique,
chacun parmi R₈ et R₉ est un groupe alkylène ayant 1 à 5 atomes de carbone,
Rₐ, R_{b}, R_{c}, et R_{d} sont chacun indépendamment l'hydrogène ou un groupe alkyle ayant 1 à 3 atomes de carbone,
x, y, z et o sont chacun indépendamment un nombre entier de 1 à 100,
c et c1 sont chacun indépendamment un nombre entier de 1 à 3, et
d et d1 sont chacun indépendamment un nombre entier de 0 à 2.

2. Composition pour un électrolyte polymère en gel selon la revendication 1, dans laquelle le solvant organique non aqueux comprend en outre un solvant organique à base de carbonate.

3. Composition pour un électrolyte polymère en gel selon la revendication 2, dans laquelle le rapport pondéral du solvant à base de glyme au solvant organique à base de carbonate est dans une plage de 1:9 à 9:1.

4. Composition pour un électrolyte polymère en gel selon la revendication 1, dans laquelle, dans la Formule 1, R₁ est -R₁'-O-, dans laquelle R₁' est un groupe alkylène ayant 1 à 5 atomes de carbone, R₂ est -O-R₂'-, dans laquelle R₂' est un groupe alkylène ayant 1 à 5 atomes de carbone, R₄, R₅, R₆, et R₇ sont chacun indépendamment un groupe alkyle ayant 1 à 3 atomes de carbone, R₈ et R₉ sont chacun indépendamment un groupe alkylène ayant 1 à 3 atomes de carbone, et Rₐ, R_{b}, R_{c}, et R_{d} sont chacun indépendamment hydrogène.

5. Composition pour un électrolyte polymère en gel selon la revendication 1, dans laquelle, dans la Formule 1, R₁ est -R₁'-O-, dans laquelle R₁' est un groupe alkylène ayant 2 à 5 atomes de carbone, R₂ est -O-R₂'-, dans laquelle R₂' est un groupe alkylène ayant 2 à 5 atomes de carbone, R₄, R₅, R₆, et R₇ sont chacun indépendamment un groupe alkyle ayant 1 à 3 atomes de carbone, R₈ et R₉ sont chacun indépendamment un groupe alkylène ayant 1 ou 2 atomes de carbone, et Rₐ, R_{b}, R_{c}, et R_{d} sont chacun indépendamment hydrogène.

6. Composition pour un électrolyte polymère en gel selon la revendication 1, dans laquelle l'oligomère représenté par la Formule 1 comprend au moins un choisi dans le groupe constitué de composés représentés par la Formule 1a et la Formule 1b, 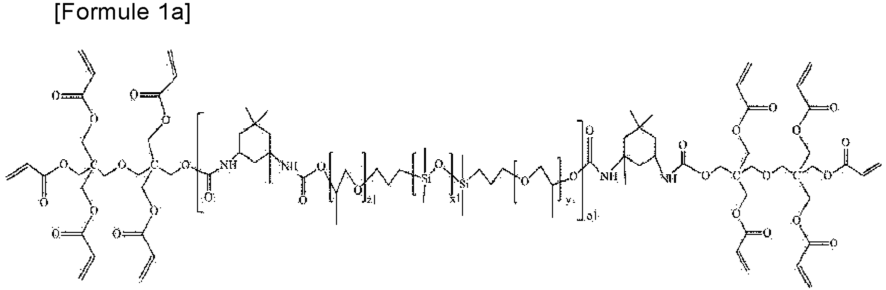 dans laquelle, dans la Formule 1a,
x1, y1, z1 et o1 sont chacun indépendamment un nombre entier de 1 à 100, 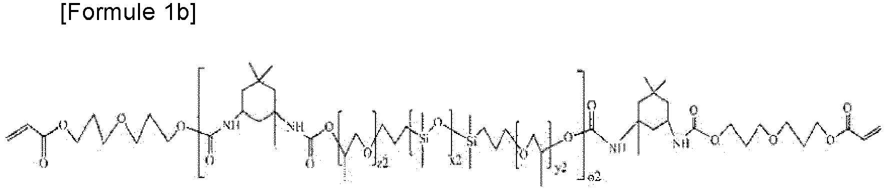 dans laquelle, dans la Formule 1b,
x2, y2, z2 et o2 sont chacun indépendamment un nombre entier de 1 à 100.

7. Composition pour un électrolyte polymère en gel selon la revendication 1, dans laquelle l'oligomère représenté par la Formule 1 est inclus en une quantité de 0,1 % en poids à 80 % en poids par rapport au poids total de la composition pour un électrolyte polymère en gel.

8. Composition pour un électrolyte polymère en gel selon la revendication 1, comprenant en outre un désoxygénant.

9. Électrolyte polymère en gel préparé par polymérisation de la composition pour un électrolyte polymère en gel selon la revendication 1.

10. Batterie secondaire au lithium comprenant une électrode positive, une électrode négative, un séparateur, et l'électrolyte polymère en gel selon la revendication 9.

11. Batterie secondaire au lithium selon la revendication 10, dans laquelle l'électrode négative est une électrode métallique constituée d'un film mince de métal ou de métalloïde, ou présente une structure dans laquelle le film mince de métal ou de métalloïde est empilé sur un collecteur d'électrode négative.

12. Batterie secondaire au lithium selon la revendication 11, dans laquelle le métal ou métalloïde comprend au moins un choisi dans le groupe constitué de lithium (Li), cuivre (Cu), nickel (Ni), sodium (Na), potassium (K), rubidium (Rb), césium (Cs), francium (Fr), béryllium (Be), magnésium (Mg), calcium (Ca), strontium (Sr), silicium (Si), antimoine (Sb), plomb (Pb), indium (In), zinc (Zn), baryum (Ba), radium (Ra), germanium (Ge), aluminium (Al), étain (Sn), argent (Ag), platine (Pt), et or (Au).
